# EUROPEAN PATENT APPLICATION

(11) **EP 1 775 245 A1**
(43) Date of publication of application: **18.04.2007**
(21) Application number: 05425749.8
(22) Date of filing: 24.10.2005
(51) Int. Cl.: B65G 63/00, B65G 1/04

(54) **Automatic modular plant for permanently or temporarily loading/unloading and/or storing containers or similar**

(30) Priority: 14.10.2005 IT PI20050110
(71) Applicant: Rolla, Gilberto, 19031 Ameglia SP (IT)
(72) Inventor: Rolla, Gilberto, 19031 Ameglia SP (IT)
(74) Representative: Turini, Laura

(57) **Abstract**

Plant (1,1A) for storing containers (6) and similar comprising a loading/unloading area (4) on the side of the store and an upper surface (12) and/or structure (2) connected to the same store. This plant is modular and automatic, so that all the operations for loading/unloading and storing the container (6) into its cell (8) are controlled automatically. This system also comprises a scanner for verifying the content of the container (6) at entrance and/or exit.

## Description

### Technical Field

The present invention concerns the technical sector relative to the production of structures or plants for storing, loading and unloading containers. In particular, this invention concerns the technical sector relative to the realization of said plants aimed at simplifying and making the placement of containers easier and safer, permitting at the same time to provide the plant with means of transport, specifically on wheels or rails.

### Background Art

Nowadays, currently existing plants for storing containers are mainly outside, open-air, made of large areas where containers are located, more or less at random, as they are unloaded from trucks, ships or other means of transport.

Storing containers on the ground, in an open space, one over the other, waiting for further transportation, above all in port areas, creates a situation of degradation and even lack of safety and controls of the stored goods. In addition, the random location of the containers, or however their stocking one over the other, causes substantial costs, both for their placement and for their carriage. As a matter of fact, in order to place a container, often you need to use a suitable vehicle or crane; in order to remove it, often you need to remove also the containers placed above or near, involving considerable time and money.

Currently, people working in storage areas must wait for a long time before placing or loading their container; for this reason the utilisation of this kind of plant is not economical.

Such a situation cannot be tolerated, especially in this historical period, because goods continuously arrive and must be arranged rapidly and safely. In addition, current plants do not permit any automatic check on the containers, therefore they cannot be monitored, unless with extreme difficulty and often they stay in the storage areas for several months, without any effective check on them.

Furthermore, these known plants, that are visible, cause a great environmental impact, therefore they cannot be realized in any zone, while in the zones where they are realized they create an environmental degradation that cannot be tolerated anymore, even according to the new rules for the protection of the environment.

What's more, these known outdoor plants take spaces that cannot be used for other purposes, whereas the increasing number of people entails the need of more and more spaces for living, either for crops, buildings, green areas or other, always in respect of the environment.

In order to solve these problems, there exist several plants for stocking under the ground. These plants consist of a structure comprising cells where containers are inserted in different ways. In fact, each container is being allocated with a vertical and horizontal position in the storage that can be reached by means of a standard automatic system. In order to get to the level of the cell where the container is located, the existing systems generally use lifts or pallets sliding from the top to the base. For example, the German patent No. DE3326017, in order to reach the lateral exact position of the cell, uses a telescopic arm that expands for the insertion of the container. On the contrary, the Japanese patent No. JP60082505 uses pallets both for vertical and horizontal movement of the container. The main drawback of these systems is that the various pallets have a different extent of movement. In fact, the upper pallets can move vertically and horizontally, whereas the lower pallets can move only horizontally preventing a free movement of the container in the storage house and creating a considerable loss of time.

What's more, before placing the containers into the stores, it's necessary to unload them from the truck or rail. This process is carried out by means of elevators or loading/unloading tracks or cranes for lifting the containers. Therefore, these systems need a human help, which involves slowness and possible errors compared with an automatic system, as well as inevitable costs of labour work.

Also patent No. WO9424032 is known: it relates a plant placed on the ground for storing containers loaded/unloaded from the ships, but it's neither automatic nor underground, it's instead only external.

Such plants for the arrangement of containers have the relevant drawback to be far from industrial, commercial, distribution, assembling and agricultural structures, which produce raw materials and finished products. Actually, trucks or elevators are always necessary for carrying the finished products to the containers. From the description of the existing systems, it's obvious that these operations of logistics and stocking take place separately and can entail long time.

The same inventor Mr. ROLLA Gilberto also filed patent No. PCT/IT05/00104, concerning a store for stocking containers, but also this invention has many drawbacks. First of all, it relates only to an underground store and it does not include the possibility to realize also an external plant having however a good environmental impact. Secondly, it provides a system for loading/unloading the containers from the top to the base, in a surface over the store transited by the vehicles placing the containers, so that this surface cannot be differently used.

### Disclosure of invention

The present invention aims at eliminating the above-mentioned and other drawbacks, supplying a modular and automatic plant for storing containers, having the characteristics described in the independent claims. Other characteristics of this plant are the object of dependent claims.

We reached the above results providing a plant for loading/unloading and/or storing containers or similar, integrated with all the means of transport and using a modular store, connected to an upper or close structure with an absolutely non-invasive result, completely automatic and suitable for any building.

The advantages resulting from the present invention essentially consist of the fact that it's operative h24; that the times for movements are extremely reduced; that it's possible to have one or more areas for loading/unloading the containers; that each container is automatically moved without constraints of stocking and regardless of the sequence of arrival or departure; that it's possible to arrange the structure in any place thanks to its modularity; that it's also possible to install the plant in obsolete industrial places, in areas out of the large motorway networks and therefore actually penalized from a logistical point of view; that it's possible to integrate it with any means of transport, e.g. on wheel, rail or port.

In particular, the rail can be preferred for carrying containers on the ground, as it considerably reduces the traffic of trucks on the motorways and the time. Another advantage of this means of transport is that it permits a different and more convenient replacement on the ground of the production centres, which will be no more necessarily close to the communication means, but they may follow different factors like the availability of labour work.

Another advantage of the present invention is its modular structure, which permits to choose the suitable wideness and height of the store.

These advantages involve a saving in time and labour work, which makes the present invention economically advantageous. Besides, as it is suitable for any place and in particular for ports, it considerably reduces the times of the operations in the port, consequently reducing the time the ships stop in the port and the relative costs.

A further advantage of this invention is the telematic connection by means of magnetic card with the users, which permits to know in real-time all the information relating to the containers of the structure.

Advantages, purposes and characteristics of the present invention can be better understood by every expert in this field, reading the following description.

Reduced to its essential structure and with reference to the figures of the enclosed drawings, a plant for storing containers, consisting of a store comprising one or more cells where containers are placed, according to the present invention, comprises:
- at least one area (4) on one side of the store (1) for loading/unloading the containers (6) or similar;
- an automatic system for placing and removing the containers in and/or from the cell.

A plant, according to this invention, includes a modular automatic completely or partially underground store (1, 1A) for storing temporarily or permanently containers or similar, integrated with all the means of transport and with upper industrial structures connected to it.

This plant comprises one or more side areas for loading/unloading containers or similar carried on trucks, trains or other means of transport, provided with an elevator (5) for bringing the container (6) out of the vehicle. Said container is then placed in the arranging area (11) where it is taken by a transporter (7) and placed in its cell (8).

Conveniently, the container is taken by means of an elevator that slides on an upper bridge where it is fixed or any other device, e.g. a lift, capable of bringing the container and placing it into the store.

In particular, in the loading/unloading area, the plant is integrated with all the means of transport and is conveniently placed close to a direct mechanical-telematic connection with the port, the rail, the quay or other means of transport.

The store of the containers can be completely or partially underground or outside. It is modular and formed by cells with sizes suitable to hold at least but preferably one container. Conveniently, said cells can be higher or larger.

These cells are piled one over the other and placed along a wall one next to the other until completion of the module.

Conveniently, said walls comprising the cells are placed one in front of the other.

Conveniently, when the store is underground, we dig the zone designed to hold the containers, we install the structure of the cells and then we cover it with soil.

Preferably, the walls are made of metal structure (generally steel or zinc steel), easy to take apart and possibly movable, constituted by a series of vertical elements fixed to the foundations and attached to horizontal metal planes.

The present invention uses a transporter to place the container into its suitable cell. Said transporter is preferably a mover-elevator (7) moving vertically and horizontally along specific tracks in order to place the container into its cell quickly and easily.

This transporter takes the container in the arranging area (11) and moves by means of platforms that make the container slide from the transporter to the cell and vice versa when the container must be unloaded. The process is the same, even if reversed, when the transporter must bring the container out of the cell and take it to the arranging area (11) first and to the side area (4) finally.

Conveniently, the horizontal movement takes place on tracks at the base of the store, while the vertical movement upwards and downwards takes place thanks to a piston or other mechanism of controlled vertical movement.

Conveniently, the removal can also take place thanks to a mechanism of cylindrical bearings, integrated into the structure, or by means of a movable pallet or other suitable systems.

A plant for storing containers, consisting of a store comprising one or more cells where containers are placed, comprises:
- at least one area (4) on one side of the store (1) for loading/unloading the containers (6) or similar;
- an automatic system for placing and removing the containers in and/or from the cell;
- and at least a structure (2) above and/or near it for industrial and/or commercial and/or craft activities or other.

A plant for storing containers, consisting of a store comprising one or more cells where containers are placed, comprises:
- at least one area (4) on one side of the store (1) for loading/unloading the containers (6) or similar;
- an automatic system for placing and removing the containers in and/or from the cell;
- and at least an upper surface (12) for the transit of the goods, for parks or areas for any purpose.

Conveniently, the store (1) can be completely underground, so that all the cells are under the ground and preferably only one or more side areas (4) for loading/unloading remain on the ground. This constructing solution is not depicted in the drawings.

In this technical solution, next to the side area (4) there is the arranging area (11), so that over the ground and on one side of the store, the container (6) is unloaded from the vehicle and placed over the transporter or similar, whereas the cells are all underground and the tansporter goes down placing the container into the selected cell.

In this solution, the upper surface (12) or the structure (2) constructed over the store have their base surface at the ground level, over the store.

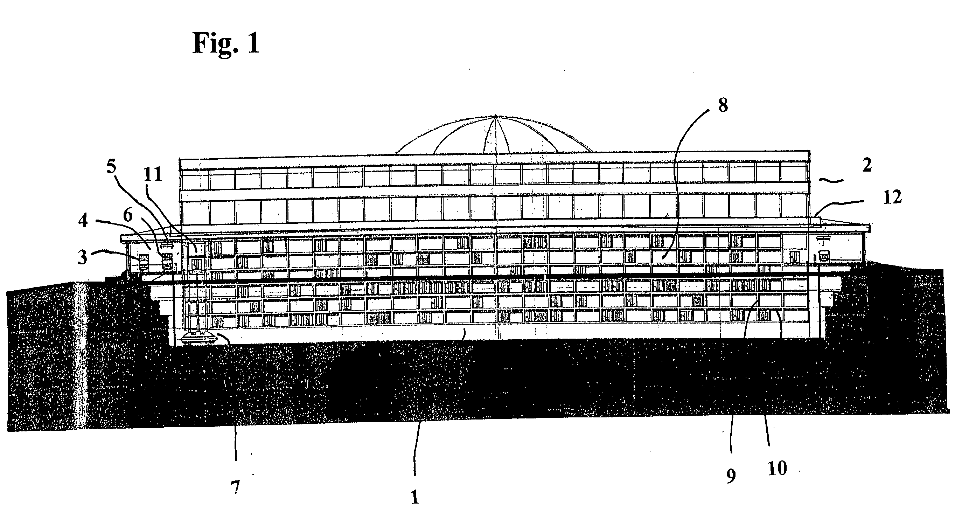

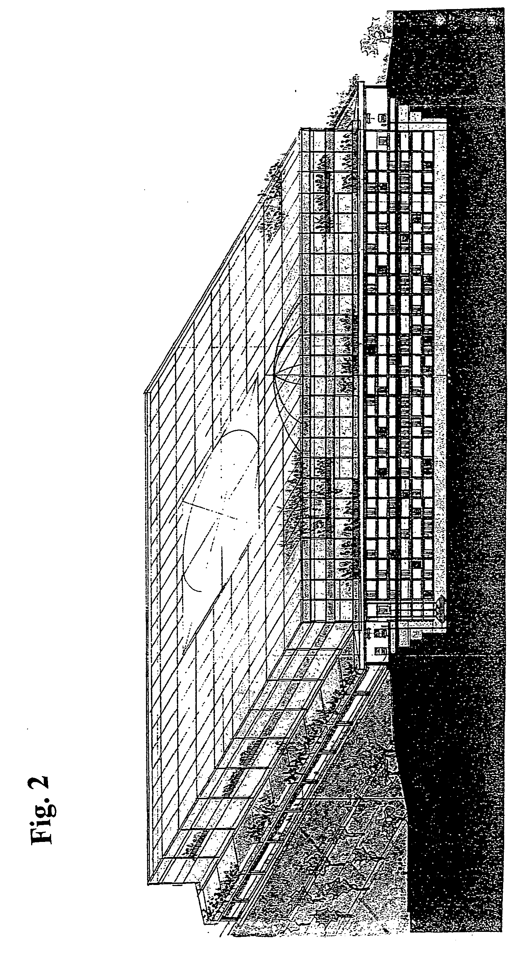

In a different practical solution, the store (1) can comprise over the ground level at least one row of cells, preferably more then one (Figs. 1 and 2), so that it is partially underground. In this solution, the upper surface (12) or the structure (2) constructed over the store (1) have their base surface at a level higher than the ground and preferably over the row of outer cells.

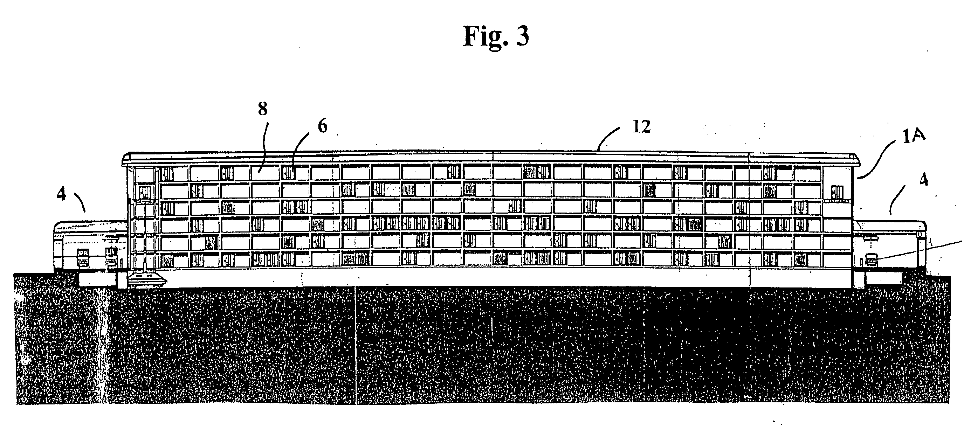

In a further practical solution, the store (1) is completely outside (Fig. 3) and the upper surface (12) or the structure (2) constructed over the store have their base surface over the top of the same store.

Conveniently, the store (1) is connected to the upper surface and/or to the upper and/or near structure.

The technical solution at issue concerns a plant that connects directly and automatically the area for loading/unloading the containers (4), the store (1) of these containers and the upper structures (2) using these containers.

Since the store (1) is connected to the upper structure, there can be an interchange between what has been produced and/or received in the upper structure and what must be stored without visual impact or vice versa. Otherwise, the upper surface can be a zone for the distribution of the goods held in the containers. In practice, the containers arriving in a port can be firstly placed into the cells (6) and then taken when necessary, whereas their content can be brought in the upper structure to be worked and/or distributed.

Conveniently, this system works completely automatically, preventing any external operation. Consequently, the phases of loading/unloading, storing and connection store/industrial structure are quick and fast. This system is preferably controlled by computer.

When the container is loaded/unloaded, the worker assigns to it a code, preferably a card, comprising all the pertaining data. Conveniently, the system for collecting data is a magnetic card or any system for registering data, like a RFID system (Radio Frequency Identification).

Conveniently, said data can include: availability, time and date of every movement/arrival/departure, possible internal transfer, content and all the data relating to the container.

The code or card permits a total check on the routing of the container. In particular, this system always detects where the container is, how much time it stays in the store, when it must be removed, the movements it takes and any other useful or necessary information. The code or card also permits to allocate the container more rapidly and at the same time to remove it accelerating the operations.

Conveniently, a container without code or card cannot be delivered to or removed from the store.

Conveniently, all the operations of loading/unloading and placement of the container into the cell are controlled by a computer, which verifies the movements of the elevator, transporter and the entire plant.

Conveniently, all the plants relating to this system can be connected each other.

Conveniently, this connection permits to follow all the transfers of the containers from one plant to the other.

Conveniently, the present invention requires that, before placing the container into the store (1), the content of the same container must be checked, preferably in the unloading area (4) or in the arranging area (11). Said areas (4 or 11) include a scanner capable of reading the content of the containers. The data read by the scanner are encoded and transmitted to a control system, preferably a central computer, which controls them and make them accessible to other analogous plants. This system is particularly useful for the anti-terrorism controls because it permits to verify the content of the container is not altered. Once the scanner of the first store has registered the content of the container, the relative data are preserved. When the container reaches its destination or another store, a similar scanner verifies its content and in the case it's different from the registered one, it can be rejected because not safe or checked. The check on the content of the containers can occur both at entrance and exit of the store.

This store has been designed for cargo containers, but it can be also used for stocking any other kind of large container.

According to a convenient practical solution for loading/unloading containers from truck, train or other means of transport, the store comprises a system that takes the container (6) and places it on the loading/unloading platform (11) of the store.

Once in the store, the container is taken by the internal moving system, consisting of a transporter or similar (7). The successive insertion of the container into the cell is carried out by means of platforms that move the container, thanks to a mechanical roller mechanism and to sliding tracks, from the transporter to the cell and vice versa for the unloading.

Every single cell has such a size suitable to hold at least one container and can be expanded in modular way both in height and wideness. The structure of the store is therefore made of cells piled one over the other and placed along a wall one next to the other until completion of the desired module. Preferably, this structure is made of metal (not oxiding metals, like steel or zinc steel), easy to take apart and possibly movable.

In a practical solution, this plant is completely automatic thanks to a system that permits to assign a cell to each container and consequently allows the moving system to place it into its cell. In this solution, each container has a magnetic card assigned, which permits to control the placement and the movements of the same container.

All the movements of the container can be followed and controlled by the forwarders by means of a computer and specifically a magnetic card assigned to every container reaches the plant.

If a container must be unloaded from a truck, the driver leaves it in the unloading area, where a worker fulfils the operations. All the operations are automatic and controlled by computer, therefore the worker assigns to the container a magnetic card including all its data, then he uses a magnetic card or a similar personal access key that activates the plant and commands the placement of the container.

In the same way, when the container must be removed, the worker activates the plant by means of his personal key or magnetic card and set on the computer the location for bringing and delivering the container.

The worker commands the removal of the container from the truck by means of an elevator that carries it into a suitable cell. From this position, the transporter brings the container and places it in a suitable cell previously set by the worker.

In the case after the container has been stored for a certain period, it's necessary to use it in the upper structure or to remove it, the worker activates again the transporter that brings the container to the desired location in the structure.

In practice, the constructing details may however equally vary as regards shape, size, position of elements, and type of materials used, but still remain within the range of the idea proposed as a solution and, consequently, within the limits of protection granted by this patent for invention.

### Brief description of drawings

The following drawings are given as practical examples of the invention, but are not to be considered restrictive.
- **Fig. 1** shows a front section of the plant partially underground with the lower part (1) corresponding to the store of the containers and an upper part (2) for industrial or commercial structures. The trucks (3) arrive in the loading/unloading area (4) and a sliding elevator (5) on the bridge unloads the container (6) and places it on a transporter (7). Said transporter can laterally move, thanks to the tracks at the base, and store the container into a cell. The modular structure of this store (1) is made of a series of cells (8) having such a size suitable to hold at least one container (6). The cells (8) of this structure are piled one over the other and placed along a wall one next to the other until completion of the desired module. The structure of the cells is constituted by a series of vertical elements (9) fixed to the concrete foundations and attached to horizontal metal planes (10). The truck (3) stops in the loading/unloading area (4), where the container is taken by the elevator (5) to the arranging area (11). From this position, it is later carried by the transporter into its cell, and vice versa when it's removed, by means of platforms that work thanks to mechanical rollers and moving tracks.
- **Fig. 2** shows a perspective view of the invention depicted in Fig. 1.
- **Fig. 3** shows a front view of the structure, consisting in this case of an external store (1A). Said store is made, like the previous one, by a series of cells (8) holding the containers (6) and has two side loading/unloading areas (4). The upper surface (12) of the store can be used for new buildings or as area for transit, parking or any other purpose.

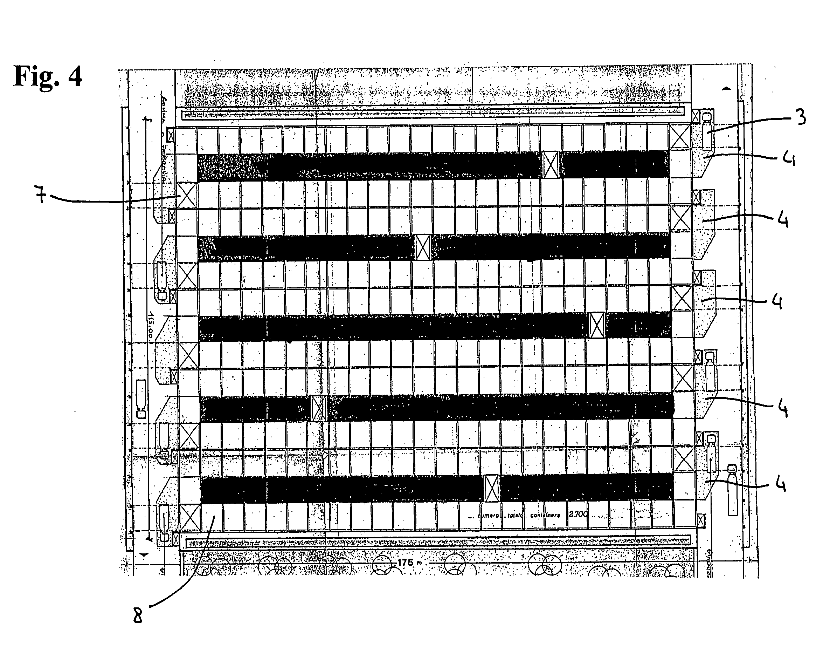

- **Fig. 4** is a top view showing the different locations of loading/unloading (4) of the trucks (3) and the tracks for the lateral movement of the transporter (7). The cells (8) of the structure are placed along a wall one next to the other until completion of the module. The black portion is the sliding area of the transporter.

## Claims

1. Plant for storing containers or similar consisting of a store comprising one or more cells where containers or similar are placed, **characterized in that** it comprises:
- at least one area (4) on one side of the store (1) for loading/unloading the containers (6) or similar;
- an automatic system for placing and removing the containers in and/or from the cell.

2. Plant as claimed in claim 1, **characterized in that** said store is either partially or totally underground or completely outside (1, 1A).

3. Plant as claimed in claim 1, **characterized in that** it comprises one or more side areas (4) for loading/unloading containers or similar carried on trucks, trains or other means of transport, provided with an elevator (5) for bringing the container (6) out of the vehicle.

4. Plant as claimed in claim 3, **characterized in that** the container is taken by means of an elevator that slides on an upper bridge where it is fixed or any other device, e.g. a lift or similar.

5. Plant as claimed in claim 1, **characterized in that** it comprises one or more arranging areas (11), where a transporter takes the container or similar and places it in its cell (8).

6. Plant as claimed in claim 1, **characterized in that** it is integrated with all the means of transport and preferably has a direct mechanical-telematic connection with the port, the rail, the quay or other means of transport.

7. Plant as claimed in claim 1, **characterized in that** the store is formed by one or more cells having such a size suitable to hold at least but preferably one container.

8. Plant as claimed in claim 1, **characterized in that** said cells can be expanded both in height and wideness, as they are piled one over the other and one next to the other until completion of the desired module.

9. Plant as claimed in claim 1, **characterized in that** the walls comprising the cells are placed one in front of the other.

10. Plant as claimed in claim 1, **characterized in that** the walls of cells are made of metal structure (steel or zinc steel or similar), easy to take apart and possibly movable, constituted by a series of vertical elements fixed to the foundations and attached to horizontal metal planes.

11. Plant as claimed in claim 1, **characterized in that** it comprises a transporter to place the container into its suitable cell and to bring it out.

12. Plant as claimed in claim 11, **characterized in that** said transporter is a mover-elevator (7) moving vertically and horizontally along specific tracks in order to place the container into its cell and bring it out quickly and easily.

13. Plant as claimed in claim 11 or 12, **characterized in that** said transporter takes the container in the arranging area (11) and moves by means of platforms that make the container slide from the transporter to the cell and vice versa.

14. A plant for storing containers, consisting of a store comprising one or more cells where containers are placed, comprises:
- at least one area (4) on one side of the store (1) for loading/unloading the containers (6) or similar;
- an automatic system for placing and removing the containers in and/or from the cell;
**characterized in that** it comprises at least a structure (2) above and/or near it for industrial and/or commercial and/or craft activities or other.

15. A plant for storing containers, consisting of a store comprising one or more cells where containers are placed, comprises:
- at least one area (4) on one side of the store (1) for loading/unloading the containers (6) or similar;
- an automatic system for placing and removing the containers in and/or from the cell;
**characterized in that** it comprises at least an upper surface (12) for the transit of the goods, for parks or areas for any purpose.

16. Plant as claimed in one or more of the above claims, **characterized in that** the store (1) is completely underground, so that all the cells are under the ground and only one or more side areas (4) for loading/unloading remain on the ground.

17. Plant as claimed in claim 16, **characterized in that** next to the side area (4) there is at least one arranging area (11), so that over the ground and on one side of the store, the container (6) is unloaded from the vehicle and placed over the transporter or similar.

18. Plant as claimed in claim 16 or 17, **characterized in that** the upper surface (12) and/or the structure (2) have their base surface at the ground level, over the store (1).

19. Plant as claimed in one or more of the above claims, **characterized in that** the store (1) comprises over the ground level at least one row of cells, preferably more then one, so that it is partially underground.

20. Plant as claimed in claim 19, **characterized in that** the upper surface (12) and/or the structure (2) constructed over the store (1) have their base surface over the row of outer cells.

21. Plant as claimed in one or more of the above claims, **characterized in that** the store (1) is completely outside and the upper surface (12) and/or the structure (2) have their base surface over the top of the same store.

22. Plant as claimed in one or more of the above claims, **characterized in that** the store (1) is connected to the upper surface and/or to the upper and/or near structure.

23. Plant as claimed in one or more of the above claims, **characterized in that** it works completely automatically.

24. Plant as claimed in claim 23, **characterized in that** the phases of loading/unloading, storing and connection store/structure and/or upper surface are directed by a control system, preferably by computer.

25. Plant as claimed in claim 23 or 24, **characterized in that** the when the container is loaded/unloaded, the worker assigns to it a code, preferably a card or a RFID code.

26. Plant as claimed in one or more of the above claims, **characterized in that** it comprises a system for controlling the content of the container.

27. Plant as claimed in claim 26, **characterized in that** it comprises a scanner for verifying the content of the container at least before its insertion in the store (1), preferably in the unloading area (4) or in the arranging area (11).

28. Plant as claimed in claim 27, **characterized in that** the unloading area (4) or the arranging area (11) include a scanner capable of reading the content of the containers.

29. Plant as claimed in claim 27 or 28, **characterized in that** the data read by the scanner are encoded and transmitted to a control system, preferably a central computer, which controls them and make them accessible to other plants or to the areas for the distribution of the cargo.
